# EUROPÄISCHE PATENTSCHRIFT

(11) **EP 0 692 504 B1**
(45) Veröffentlichungstag und Bekanntmachung des Hinweises auf die Patenterteilung: **25.02.1998**
(21) Anmeldenummer: 95110534.5
(22) Anmeldetag: 06.07.1995
(51) Int. Cl.: C08F 259/08, C08F 255/02, C08F 214/18, C08F 210/02

(54) **Copolymere vom Typ Tetrafluorethylen-Ethylen mit einer Kern-Hülle-Teilchenstruktur**
Tetrafluoroethylene-ethylene copolymers with a core-shell particle structure
Copolymères du type tétrafluoréthylène-éthylène avec une structure particulaire "core-shell"

(30) Priorität: 12.07.1994 DE 4424466
(43) Veröffentlichungstag der Anmeldung: 17.01.1996
(73) Patentinhaber: Dyneon GmbH, 84504 Burgkirchen (DE)
(72) Erfinder: Mühlbauer, Hans Peter, Dr., D-82340 Feldafing (DE)

(56) Entgegenhaltungen:
- EP-A- 0 373 588
- DE-A- 2 544 040
- DATABASE WPI Section Ch, Week 8631 Derwent Publications Ltd., London, GB; Class A14, AN 79-85163B & JP-B-61 029 366 ( ASAHI GLASS KK) , 7.Juli 1986

## Beschreibung

Die Erfindung betrifft eine wäßrige Fluorpolymer-Dispersion, bestehend aus kolloidalen Teilchen, enthaltend ein aus der Schmelze verarbeitbares Copolymeres von Tetrafluorethylen (TFE), Ethylen (E) und von gegebenenfalls weiteren fluorolefinischen Comonomeren sowie ein weiteres aus der Schmelze verarbeitbares Polymeres, die daraus gewonnenen Copolymerpulver, ein Verfahren zur Herstellung solcher Dispersionen und die Verwendung solcher Copolymerer.

Homo- und Copolymere des TFE zeichnen sich durch große chemische Beständigkeit, durch Wärmebeständigkeit und durch gute dielektrische Eigenschaften aus.

Solche Homo- und Copolymere des TFE sind auch schon nach einer ganzen Reihe von Verfahren zu porösen Formkörpern und insbesondere zu porösen Membranen verarbeitet worden.

So ist es bekannt, Polytetrafluorethylen (PTFE) - das Homopolymere des TFE - mit temporären Porenbildnern zu versehen, die dann nach erfolgter Formgebung wieder herausgelöst werden oder sich beim nachfolgenden Sintern des PTFE-Formkörpers unter Bildung gasförmiger Produkte zersetzen und auf diese Weise eine poröse Struktur hinterlassen. Aus der GB-A-2 168 981 ist es bekannt, Copolymere aus TFE und E mit einem feinverteilten pulverförmigen anorganischen Material, wie zum Beispiel Calciumsilicat oder Calciumcarbonat, sowie mit einem Chlortrifluorethylen-Oligomeren und gegenenfalls einer anderen wärmebeständigen organischen Substanz, wie zum Beispiel Siliconöl, zu vermischen. Nach der Formgebung aus der Schmelze wird zunächst in einem ersten Extraktionsschritt das Chlortrifluorethylen-Oligomere und dann in einem zweiten Extraktionsschritt die pulverförmige anorganische Substanz entfernt.

Neben dem aufwendigen Verfahren des Einbringens und Entfernens des Porenbildners ist der Nachteil dieser Verfahrensweise, daß es kaum gelingt, die porenbildenden Substanzen restlos zu entfernen. So sind Verunreinigungen des porösen Formgebildes unvermeidlich. Im Falle eines zu gasförmigen Produkten zersetzbaren Porenbildners können so Zersetzungsrückstände zurückbleiben. Auch müssen bei aus der Schmelze verarbeitbaren Copolymeren des TFE, die niedrigere Schmelzpunkte aufweisen als PTFE, Porenbildner mit sehr niedrigen Zersetzungstemperaturen gewählt werden, da sonst das Copolymere bei stärkerer Erhitzung aufschmilzt und die Porenstruktur verlorengeht. Naturgemäß ist die Auswahl solcher Porenbildner sehr begrenzt.

PTFE-Feinpulver, hergestellt aus kolloidalen PTFE-Dispersionen, sind bekanntermaßen in eine poröse Fibrillen-Knoten-Struktur überführbar, wenn man sie zunächst in Gegenwart eines Gleitmittels extrudiert, den nach Entfernung des Gleitmittels so gewonnenen Strang mit hohen Reckverhältnissen und/oder -geschwindigkeiten reckt und die gewonnenen porösen Gebilde unter Fixierung ihrer Struktur sintert. Dieser Prozeß ist beschränkt auf solche TFE-Polymerisate, die wegen ihrer extrem hohen Schmelzviskosität aus der Schmelze nicht verarbeitbar sind, das heißt PTFE selbst und solche TFE-Copolymerisate, die nur sehr geringe Mengen an Comonomeren enthalten (< 2 Gew.-%). TFE-Copolymere mit höheren Mengen an Comonomeren, die aus der Schmelze verarbeitbar sind, können nach solchen Prozessen nicht verarbeitet werden, da ihre poröse Struktur beim Fixieren zumindest teilweise unter Verschmelzen wieder verlorengeht.

Aus der JP-A 79-158465 ist ein Verfahren bekannt, bei dem ein Film aus einem TFE/E-Copolymeren mit geladenen Teilchen aus einem Kernreaktor beschossen wird, wodurch eine mikroporöse Struktur erhalten wird. Diese Struktur ist aber nicht aus gekrümmten oder gewundenen Kanälen, entsprechend einer dreidimensionalen Netzwerkstruktur, sondern ausschließlich aus durchgehend geraden Poren aufgebaut. Sie setzt bei der Anwendung als Batterieseparator einem Zellschluß daher keinen hinreichenden Widerstand entgegen.

Aus der US-A 2 400 091 ist ein Verfahren bekannt, bei dem poröse Gegenstände dadurch hergestellt werden, daß man PTFE bis zur Sintertemperatur erhitzt, nach dem Abkühlen zerkleinert, das erhaltene Pulver durch Formpressen unter erhöhtem Druck zu einem porösen Gegenstand verformt und diesen Gegenstand durch erneutes Sintern verfestigt.

Ein solches Verfahren, das eine einfache Steuerung der Porengröße und -struktur erlaubt, wäre auch für die Herstellung von porösen Strukturen aus Copolymeren des TFE/E und gegebenenfalls einem oder mehreren zusätzlichen Comonomeren sehr erwünscht, da diese Copolymere im Vergleich zu PTFE eine erhöhte Beständigkeit gegen bestimmte Elektrolyte aufweisen und daher insbesondere als Batterieseparatoren sehr geeignet sind. Dies scheitert jedoch daran, daß bei den handelsüblichen Copolymeren des Typs TFE/E die gebildete Porenstruktur bei der Fixierung in der Hitze nicht reproduzierbar aufrechterhalten bleibt.

Es bestand daher die Aufgabe, ein Copolymeres des Typs TFE/E zu schaffen, das direkt, gegebenenfalls unter Druck, zu einem porösen Formgebilde verformt werden kann und dessen Porenstruktur bei der anschließenden thermischen Fixierung zuverlässig erhalten bleibt.

Zur Lösung der genannten Aufgabe stellt die vorliegende Erfindung Fluorpolymere in Form einer wäßrigen Dispersion der eingangs genannten Art zur Verfügung. Die Erfindung betrifft deshalb eine wäßrige Dispersion kolloidaler Teilchen eines aus der Schmelze verarbeitbaren Copolymers, bestehend aus
a) einem Teilchenkern aus einem Copolymer mit Einheiten aus
   32 bis 60 Mol-% Tetrafluorethylen,
   40 bis 60 Mol-% Ethylen und
   0 bis 8 Mol-% mindestens eines copolymerisierbaren fluorolefinischen Monomeren, sowie
b) mindestens einer Teilchenhülle aus einem aus der Schmelze verarbeitbaren Polymer mit einem um mindestens 20 °C niedrigeren Schmelzpunkt als dem des Copolymer des Teilchenkerns,
wobei das Volumen der Teilchenhülle(n) 1 bis 26 Vol.-% des Gesamtvolumens des Teilchens beträgt. Bevorzugte Ausgestaltungen der Erfindung werden im folgenden näher erläutert:
Copolymere vom Typ TFE/E, wie sie den Teilchenkern a) ausmachen, sind bekannt, zum Beispiel aus US-A 2 468 664, 3 624 250, 3 859 262, 3 960 825, 4 020 253, 4 123 602 und 4 381 387. Bevorzugte Copolymere enthalten die beiden Hauptkomponenten TFE und E im Verhältnis 40 : 60 bis 60 : 40 Mol-%. Daneben kann noch in kleineren Anteilen mindestens ein weiteres fluorolefinisches Comonomeres zugegen sein, das bestimmte Eigenschaften eines solchen Copolymeren zu verbessern vermag. Solche Comonomere sind beispielsweise Perfluorolefine mit 3 bis 8 C-Atomen, Perfluoralkylvinylether der Formel

Rf1-[O-CF(CF₃)-CF₂]ₙ-CF₂-O-CF=CF₂

worin Rf1 ein Perfluoralkylrest mit 1 bis 5 C-Atomen ist und n = 0 bis 3 sein kann,
oder Fluorolefine der Formeln

CH₂=CH-Rf2

oder 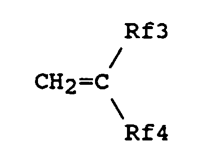 worin Rf2 und Rf3 einen Perfluoralkylrest mit 1 bis 8 C-Atomen und Rf4 F oder CF₃ bedeuten.

Besonders zu erwähnende Vertreter dieser Gruppen sind Hexafluorpropylen (HFP), Perfluorpropylvinylether, Hexafluorisobutylen und Perfluorbutylethylen. Weiterhin sind zu nennen Trifluorethylen, Vinylidenfluorid, Vinylfluorid und Chlortrifluorethylen. Das Copolymere kann auch aus mehr als drei dieser Comonomeren bestehen. Art und Anteil dieser Comonomeren sind dabei zweckmäßigerweise so zu bemessen, daß der Schmelzpunkt des den Teilchenkern ausmachenden Copolymeren ≥ 250 °C ist. Der Anteil dieser weiteren Comonomeren beträgt bis zu 8 Mol-%, vorzugsweise bis zu 6 Mol-%. Somit beträgt der TFE-Gehalt mindestens 32 Mol-%.

Um diesen Teilchenkern ist vorzugsweise unmittelbar anschließend und umschließend angeordnet eine Teilchenhülle, die vorzugsweise in bezug auf den Teilchenkern relativ dünn ist. Sie besteht aus einem aus der Schmelze verarbeitbaren, vorzugsweise fluorhaltigen, Homo- oder Copolymeren, das vor allem der Bedingung genügen muß, daß es einen um mindestens 20 °C niedrigeren Schmelzpunkt besitzt als das den Teilchenkern ausmachende Copolymere vom Typ TFE/E.

Das Volumen der Teilchenhülle beträgt 1 bis 26 Vol.-%, vorzugsweise 3 bis 15 Vol.-%, des Volumens des Gesamtteilchens, bestehend aus Kern und Hülle.

Das die Teilchenhülle ausmachende, aus der Schmelze verarbeitbare Polymere kann ein Homopolymeres sein, wie beispielsweise Polychlortrifluorethylen, Polyvinylidenfluorid oder Polyvinylfluorid. Es kann aber auch ein aus der Schmelze verarbeitbares Copolymeres sein, beispielsweise Copolymere von TFE mit Chlortrifluorethylen oder Vinylidenfluorid, von TFE mit HFP und Vinylidenfluorid (soweit sie einen Kristallitschmelzpunkt besitzen), Copolymere von Chlortrifluorethylen mit Vinylidenfluorid und Copolymere des Vinylfluorids. In einer bevorzugten Ausführungsform der Erfindung wird die äußere Hülle gebildet von Copolymeren des Typs Chlortrifluorethylen/E oder insbesondere TFE/E, in denen mindestens ein zusätzliches Comonomeres in einem so hohen Anteil enthalten ist, daß der Schmelzpunkt auf den geforderten Bereich von mindestens 20 °C unter dem Schmelzpunkt des Polymeren des Teilchenkerns abgesenkt ist. Eine solche bevorzugte Zusammensetzung ist die eines Copolymeren mit 20 bis 30 Mol-% TFE, 40 bis 60 Mol-% E und 10 bis 30 Mol-% HFP oder 10 bis 30 Mol-% eines Gemisches aus HFP und einem weiteren Monomeren wie Perfluorpropylvinylether, Chlortrifluorethylen, Hexafluorisobutylen oder Perfluorbutylethylen.

Wenn auch eine Schmelzpunktdifferenz von 20 °C zwischen Teilchenkern und -hülle ausreichend ist, so ist doch eine Teilchenhülle zu bevorzugen, deren Schmelzpunkt stärker erniedrigt ist, beispielsweise um ≥ 50 °C niedriger liegt als der des Teilchenkerns, weil dadurch ein problemloseres Verschmelzen der Teilchen über ihre Hüllen möglich wird, ohne daß die Teilchenkerne, die den wesentlichen Anteil ausmachen, verändert werden. Somit entsteht eine definierte, sozusagen punktförmig verbundene poröse Struktur. Es wird ersichtlich, daß die Porosität in einfacher Weise über das Ausmaß des Anteils der leicht schmelzbaren Teilchenhülle am Gesamtteilchen gesteuert werden kann.

Die Herstellung der erfindungsgemäßen Fluorpolymer-Dispersionen aus kolloidalen Teilchen mit einer Hülle-Kern-Struktur erfolgt nach dem für Fluorpolymere üblichen und bekannten Verfahren der Dispersionspolymerisation zu wäßrigen kolloidalen Dispersionen, wobei dieses Verfahren in zwei Stufen abläuft.

In beiden Stufen werden die üblichen Druck- und Temperaturbedingungen angewendet und die für die Polymerisation von Fluorolefinen zu wäßrigen kolloidalen Dispersionen üblichen Hilfsstoffe zugegeben.

Die Polymerisation erfolgt vorteilhaft in wäßriger Phase bei üblichen Drücken von 5 bis 50 bar, vorzugsweise 10 bis 25 bar, sowie bei Temperaturen von -50 bis +150 °C, vorzugsweise von +20 bis +100 °C, in Gegenwart von für die Dispersionspolymerisation von Fluorolefinen üblichen wasserlöslichen, radikalbildenden Initiatoren. Dies können wasserlösliche, peroxidische Verbindungen sein wie anorganische oder organische Peroxide, Diacylperoxide oder Persäuren einschließlich deren wasserlöslichen Salze, wie beispielsweise die Perborate, Percarbonate und insbesondere Persulfate (vorzugsweise Alkali- oder Ammoniumsalze).

Ferner sind einsetzbar wasserlösliche Redox-Initiator-Systeme, also Kombinationen aus einer der genannten peroxidischen Verbindungen und einer reduzierenden Komponente, wie beispielsweise einem wasserlöslichen Disulfit, Thiosulfat, Dithionit, Hydrogensulfit oder Sulfinat oder auch einer Diimin liefernden Verbindung wie Azodicarbonsäure und deren Salze oder Azodicarbonamid.

Bevorzugte Initiatoren sind die Säuren und Salze des Mangans, wie sie in der US-A 3 859 262 beschrieben sind. Dies sind insbesondere die Salze der Mangansäure(VII) wie Kaliumpermanganat, Natriumpermanganat, Bariumpermanganat, Magnesiumpermanganat; weiterhin Salze der Mangansäure(VI), die Manganate, wie beispielsweise Kaliummanganat, Ammoniummanganat, Natriummanganat und Calciummanganat; ferner eignen sich die Salze der Mangansäure(V) wie Natriumhypomanganat (Na₃MnO₄ · 10 H₂O) und die Salze der Mangansäure(IV), die Manganite. Auch die freien Säuren selbst, sofern sie im wäßrig-sauren Milieu beständig sind, können als Initiatoren verwendet werden, wie beispielsweise das kristalline Dihydrat der Permangansäure (HMnO₄ · 2 H₂O). Ebenso aktive Katalysatoren sind Substanzen, die erst unter den Bedingungen der Polymerisation in die vorgenannten Verbindungen übergehen, wie beispielsweise Säureanhydride wie Manganheptoxid (Mn₂O₇), ferner Oxyhydrate, Säurehalogenide und andere leicht hydrolysierbare höherwertige Manganverbindungen. Am vorteilhaftesten lassen sich Alkalipermanganate und Alkalimanganate oder die entsprechenden Ammoniumsalze, insbesondere Kaliumpermanganat und Kaliummanganat, verwenden.

Die Initiatormengen liegen in dem für die Dispersionspolymerisation von Fluorolefinen üblichen Rahmen. Sie betragen 0,00005 bis 0,1 Gew.-%, vorzugsweise 0,0005 bis 0,03 Gew.-%, bezogen auf das wäßrige Polymerisationsmedium (wobei im Falle von Redox-Systemen die oxidierende Komponente gemeint ist). Mit Vorteil bedient man sich bei Redox-Systemen auch des bekannten Zusatzes von geringen Mengen von Cokatalysatoren, beispielsweise von wasserlöslichen Salzen des Kupfers, Eisens oder Silbers.

Die Polymerisation wird in üblicher Weise in dem bei der Dispersionspolymerisation von Fluorolefinen eingehaltenen pH-Bereich durchgeführt, der sich nach der Art des eingesetzten Initiators richtet und im Bereich von 3 bis 9 liegt. Bekannte Puffersubstanzen können zugegen sein.

Ferner werden für die Dispersionspolymerisation zu kolloidalen Dispersionen des erfindungsgemäßen Verfahrens Emulgatoren eingesetzt, wie sie für die Dispersionspolymerisation von Fluorolefinen üblich und gebräuchlich sind und wie sie beispielsweise in der US-A 2 559 752 beschrieben sind. Beispielsweise seien genannt die Alkali- und Ammoniumsalze von längerkettigen Perfluorcarbonsäuren, ω-Hydroperfluorcarbonsäuren, Chlorfluorcarbonsäuren, Perfluordicarbonsäuren sowie auch Perfluorsulfonsäuren und Perfluorphosphonsäuren. Bevorzugt besitzen solche Emulgatoren eine Kohlenstoffkette von 6 bis 12 C-Atomen. Bevorzugte Emulgatoren im Rahmen des erfindungsgemäßen Verfahrens sind die Ammoniumsalze der ω-Hydroperfluoroctansäure und insbesondere der Perfluoroctansäure. Salze der Perfluorpropoxypropionsäure seien als ein weiteres Beispiel für eine Klasse von gut wirksamen Emulgatoren erwähnt. Die genannten Emulgatoren können gegebenenfalls auch in Form der freien Säuren eingesetzt und mit Ammoniak neutralisiert werden. Die eingesetzten Emulgatoren sollen möglichst telogen inaktiv sein.

Die Mengen an Emulgator liegen in dem für die Dispersionspolymerisation von Fluorolefinen üblichen Rahmen. Sie betragen etwa 0,02 bis 0,5 Gew.-%, vorzugsweise etwa 0,05 bis 0,4 Gew.-%, bezogen auf das wäßrige Polymerisationsmedium.

Gegebenenfalls können bei der Copolymerisation zur Einstellung bestimmter, verarbeitungsgerechter Schmelzviskositäten den herzustellenden Copolymeren übliche Kettenübertragungsmittel zugegeben werden, wie beispielsweise Aceton, Methylenchlorid oder Chloroform.

In einer bevorzugten Ausführungsform des erfindungsgemäßen Verfahrens wird die Copolymerisation in Gegenwart der obengenannten Manganverbindungen als Initiatoren und eines Kettenübertragungsmittels der allgemeinen Formel

X-CH₂-COOR

worin X = Cl, Br, COOH, COOR', COCH₃, CH₃, C₂H₅ oder C₃H₇ ist und R und R' gleiche oder verschiedene Alkylreste mit 1 bis 4 C-Atomen bedeuten,
durchgeführt, wie beschrieben in der US-A 4 338 237.

Bevorzugte Kettenübertragungsmittel der genannten Formel sind der Dimethylester, der Methylethylester und besonders der Diethylester der Malonsäure.

Es liegt im Rahmen der Erfindung, daß auch Gemische der genannten Kettenübertragungsmittel zugegeben werden können.

Es ist weiterhin vorteilhaft, wenn die Copolymerisation nach dem erfindungsgemäßen Verfahren in Gegenwart einer die Dispersion stabilisierenden, nicht-tensidischen Verbindung der allgemeinen Formel 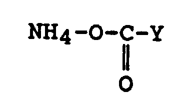 worin Y = COONH₄, COOH, CH₃, CH₂OH, CH₂COOH oder CH₂COONH₄ ist,
oder eines Gemisches dieser Verbindungen vorgenommen wird. Bevorzugte, die Dispersion stabilisierende Verbindungen sind Monoammonium- und insbesondere Diammoniumoxalat. Die genannten stabilisierenden Verbindungen können auch als Hydrate vorliegen und es können Gemische von Verbindungen aus der angegebenen Gruppe eingesetzt werden. Auch dies ist beschrieben in der US-A 4 338 237.

Das erfindungsgemäße Verfahren zur Herstellung der oben beschriebenen wäßrigen Fluorpolymer-Dispersionen mit kolloidalen Teilchen mit einer Hülle-Kern-Struktur ist dadurch gekennzeichnet, daß
A) eine Saatdispersion durch Copolymerisation von TFE, E und gegebenenfalls mindestens einem weiteren fluorolefinischen Comonomeren hergestellt wird, und sodann
B) die Polymerisation in Gegenwart der Saatdispersion A) durch Zuführen von Monomeren fortgesetzt wird, die ein Polymeres bilden, das einen um mindestens 20 °C niedrigeren Schmelzpunkt besitzt als das Copolymere von Stufe A).

Die Copolymerisation zur Gewinnung der kolloidalen Saatdispersion in Stufe A) wird solange fortgesetzt, bis eine wäßrige Saatdispersion mit einem Feststoffgehalt von 6 bis 20 Gew.-%, vorzugsweise von 8 bis 15 Gew.-%, gebildet ist. Der Schmelzpunkt der Polymerisatpartikel dieser Saatdispersion soll vorzugsweise bei ≥ 250 °C liegen. Die hergestellte Saatdispersion enthält überwiegend sphärisch geformte, gleichmäßig große Polymerisatpartikel im kolloidalen Teilchengrößenbereich (mittlerer Durchmesser von 0,01 bis 1 µm, vorzugsweise 0,05 bis 0,5 µm).

In der Verfahrensstufe B) wird die Polymerisation mit dieser gemäß Stufe A) hergestellten kolloidalen Saatdispersion fortgesetzt. Diese Fortsetzung kann so erfolgen, daß die in einem getrennten Arbeitsgang hergestellte Saatdispersion A) im Reaktionsgefäß vorgelegt wird, wobei die für die Stufe B) erforderliche Menge an Emulgator und gegebenenfalls an weiteren Polymerisationshilfsstoffen vor der Fortsetzung der Dispersionspolymerisation, zweckmäßig in Form von wäßrigen Lösungen, zugegeben wird. Nach Zudosieren des oder der einzusetzenden Monomeren wird die Polymerisation durch Zugabe des Initiators erneut gestartet. Die Zugabe der Polymerisations-Ingredienzien kann hier ebenso wie in Stufe A) auch darin bestehen, daß eine Teilmenge vorgelegt und die erforderliche Restmenge im Verlauf der jeweiligen Polymerisation chargenweise oder kontinuierlich in das Gefäß über geeignete Zuleitungen nachgeschleust wird. Ebenfalls ist eine kontinuierliche Zugabe während des gesamten Polymerisationsprozesses möglich.

Die Fortsetzung der Dispersionspolymerisation der Stufe A) kann jedoch auch so erfolgen, daß nach deren Beendigung
a) eine Zwischenentspannung unter weitgehender Entfernung der Gasphase und Zudosierung des oder der für die Stufe B) erforderlichen Monomeren oder
b) eine Entspannung unter nur teilweiser Entfernung der Gasphase und Ergänzung des oder der für Stufe B) erforderlichen Monomeren oder
c) eine Zudosierung des oder der für die Stufe B) erforderlichen Monomeren in den erforderlichen Mengenverhältnissen
vorgenommen wird. Hierauf wird, falls erforderlich, die Dispersionspolymerisation erneut gestartet. Hierbei wird zweckmäßig die Gesamtmenge an Emulgator und gegebenenfalls anderen Hilfsstoffen für die Stufe B) bereits bei Beginn der Stufe A) zugegeben. Es ist aber auch möglich, wie vorstehend beschrieben, eine Nachschleusung in Teilmengen oder kontinuierlich vorzunehmen.

Die Copolymerisation der Verfahrensstufe B) wird solange fortgesetzt, bis die dabei entstehende Schale des Polymerisatpartikels den gewünschten Volumenanteil, maximal 26 Vol.-%, des Gesamtvolumens des Polymerisatpartikels erreicht. Die Volumenvergrößerung eines Polymerisatpartikels um maximal 26 Vol.-% des erreichten Endgesamtvolumens ergibt eine Vergrößerung des Polymerisatpartikels um lediglich maximal 10,6 % des Partikeldurchmessers.

Die so hergestellte Dispersion enthält überwiegend sphärisch geformte, gleichmäßig große Polymerisatpartikel im kolloidalen Teilchengrößenbereich. Sie hat üblicherweise einen Feststoffgehalt von bis zu 25 Gew.-%.

Die Bildung von Koagulat ist bei dem erfindungsgemäßen Verfahren sehr gering. Es werden weniger als 1 Gew.-% Koagulat, bezogen auf die Gewichtsmenge an gebildetem, kolloidal verteiltem Copolymerisat-Feststoff, gefunden.

Die erfindungsgemäßen Fluorpolymer-Dispersionen mit Kern-Hülle-Struktur können über Ionenaustauscher von Fremdionen befreit und nach bekannten Verfahren, wie beispielsweise durch Eindampfen im Vakuum oder durch Ultrafiltration zu Dispersionen mit höherem Feststoffgehalt bis 60 Gew.-% aufkonzentriert werden.

Die erfindungsgemäßen Fluorpolymer-Dispersionen können auch nach bekannten Verfahren, wie beispielsweise durch Einwirkung mechanischer Scherkräfte oder durch den Zusatz von Elektrolyten, als Pulver von der Dispersionsflotte abgetrennt beziehungsweise koaguliert werden. Die daraus resultierenden Pulver sind aufgebaut aus Agglomeraten der oben beschriebenen Dispersions-Primärteilchen. Diese Agglomerate (Sekundärteilchen) besitzen einen mittleren Teilchendurchmesser von 5 µm bis 2 mm.

Die auf diese Weise hergestellten, aus Primärteilchen der Dispersion zusammengesetzten, porösen Sekundärteilchen können über die an der Oberfläche der Sekundärteilchen liegenden Hüllen der Primärteilchen wiederum zu einer übergeordneten porösen Struktur verbunden werden, wobei eine Porosität mit kleinen Poren innerhalb der Sekundärteilchen und größeren Poren zwischen den Sekundärteilchen resultiert.

Bei der Koagulation ist es jedoch etwas schwierig, zu einer engen Teilchengrößenverteilung der Sekundärteilchen zu gelangen. Daher ist eine bevorzugte Methode zur Abtrennung des Pulvers aus der wäßrigen Dispersionsflotte die Sprühtrocknung, die es gestattet, Sekundärteilchen mit einer vorgegebenen mittleren Teilchengröße und einer engen Teilchengrößenverteilung gezielt zu erzeugen. Die mittlere Teilchengröße kann dabei in einem weiten Größenbereich eingestellt werden. Bevorzugt ist eine mittlere Teilchengröße von 1 bis 100 µm, insbesondere von 5 bis 50 µm, vor allem von 10 bis 20 µm.

Die weitere Verarbeitung des koagulierten, getrockneten Pulvers oder des sprühgetrockneten Pulvers zu einem porösen flächigen Gebildete kann beispielsweise so erfolgen, daß dieses Pulver in lockerer Schüttung oder durch Aufsprühen auf einen Träger, beispielsweise eine hochglänzende Metallfläche oder eine Aramidfolie, aufgebracht wird. Dieser Träger muß ein leichtes Ablösen des geformten porösen Flächengebildes gestatten und kann mit Materialien überzogen sein, die einen Antihafteffekt bewirken und sich bei der Sintertemperatur nicht zersetzen.

Die Pulverschicht kann auch noch mit einem antiadhäsiven Flächengebilde abgedeckt werden, so daß gegebenenfalls leichter Druck von oben angewandt werden kann. Nun wird in einem Ofen bei einer Temperatur oberhalb des Schmelzpunktes des Materials der Teilchenhülle, aber unterhalb des Schmelzpunktes des Teilchenkerns gesintert, was je nach Schichtdicke eine Zeit bis zu 1 Stunde erfordert. Hierbei findet durch das Verschmelzen der Teilchenhülle ein Verbinden der Teilchen zu einem dreidimensionalen Netzwerk statt. In kontinuierlicher Weise kann dieser Vorgang in einer üblichen Bandsinteranlage ablaufen. Zum Schluß wird die so geformte poröse Schicht vom Träger entfernt.

Die so erzeugten porösen Flächengebilde können neben der bereits erwähnten Verwendung als Batterieseparatoren auch eingesetzt werden als Filtermaterial in chemischen Prozessen, als Membranen für Dialyse, Ultrafiltration, Osmose und Trinkwasseraufbereitung. Es können aber auch kompakte Formkörper wie zum Beispiel poröse Rohre für Filtrationszwecke hergestellt werden.

Die so erzeugten porösen Gebilde zeichnen sich aus durch eine dreidimensionale Netzwerkstruktur mit definierter und steuerbarer Porengröße, die verwinkelte und gekrüümte Porengänge aufweist. Es bedarf bei ihrer Herstellung nicht des Zusatzes von Porenbildnern, bei deren Zersetzung oder Entfernung meist Verunreinigungen zurückbleiben. Sie weisen eine hohe Chemikalienbeständigkeit auf, insbesondere gegen Chemikalien, wie sie in Batterieelektrolyten vorkommen.

### Beispiele 1 bis 3

In den Beispielen 1 bis 3 wird unter folgenden Reaktionsbedingungen gearbeitet:

In einem emaillierten Polymerisationsreaktor mit einem Gesamtvolumen von 16 l, ausgestattet mit einem Stromstörer und Impellerrührer, werden 10 l entsalztes Wasser eingefüllt, in dem 40 g Diammoniumoxalat-monohydrat, 5 g Oxalsäure, 35 g Perfluoroctansäure und die in Tabelle 1 angegebene Menge Malonsäurediethylester gelöst sind. Der Polymerisationsreaktor wird zunächst mit Stickstoff und anschließend mit TFE gespült. Die Rührgeschwindigkeit wird auf 320 Upm eingestellt. Dann wird TFE bis zu einem Druck von 12,5 bar und anschließend E bis zu einem Gesamtmonomerdruck von 17 bar aufgepreßt. Danach wird die Polymerisation durch Einpumpen einer Lösung von Kaliumpermanganat mit einer Konzentration von 0,5 g KMnO₄ pro 1 l Wasser gestartet. Die Zufuhr der Kaliumpermanganat-Lösung wird nach dem Polymerisationsstart so einreguliert, daß eine Polymerisationsgeschwindigkeit von 20 bis 100 g l⁻¹ h⁻¹ erreicht wird. Die Polymerisationstemperatur liegt bei 40 °C und wird mit einem Heiz-/Kühlmedium über den Heiz-/Kühlmantel des Polymerisationsreaktors konstant gehalten. Die entstehende Polymerisationswärme wird dabei ausgeglichen. Der Gesamtmonomerdruck von 17 bar wird automatisch durch kontinuierliche Zuspeisung eines TFE-E-Gemisches im molaren Verhältnis 1 : 1 aufrechterhalten. Die Reaktion wird bei der in Tabelle 1 angegebenen Menge an zugespeisten Monomeren durch Beenden der Zufuhr der Kaliumpermanganat-Lösung und durch Entspannen des Monomerengemisches zunächst unterbrochen. Zur Bestimmung der mittleren Teilchengröße wird eine Dispersionsprobe entnommen (die Werte sind in Tabelle 1 angegeben).

Nach dem vollständigen Evakuieren des Gasraums werden erneut TFE und E und zusätzlich HFP in den in Tabelle 1 angegebenen Mengen bis zu einem Gesamtmonomerdruck von 17 bar aufgepreßt. Danach wird die Polymerisation wiederum durch das Zupumpen der Kaliumpermanganat-Lösung gestartet und aufrechterhalten. Das jeweilige Zuspeisungsverhältnis der Monomeren ist in Tabelle 1 angegeben. Die Reaktion wird bei der in Tabelle 1 angegebenen Menge an zugespeisten Monomeren durch Beenden der Zufuhr der Kaliumpermanganat-Lösung, durch Abstellen der Rührung, durch Entspannen des Monomergemisches und Kühlen auf Raumtemperatur abgebrochen. Während der Polymerisation gebildetes Koagulat wird durch Filtration abgetrennt, dieses getrocknet und gewogen. Der genaue Feststoffgehalt der filtrierten Dispersion wird durch Dichtemessung festgestellt. Die eingesetzte Menge an Kaliumpermanganat, die Polymerisationsdauer, die Menge an wäßriger Dispersion, der Polymerisat-Feststoffgehalt, die mittlere Teilchengröße und die Koagulatmenge sind in Tabelle 1 angegeben.

Zur Charakterisierung der erhaltenen Polymerisate wird die Dispersion durch einen schnell laufenden Rührer koaguliert.

Der ausgefällte Polymerisat-Feststoff wird von der Flotte getrennt, mehrmals mit Wasser gewaschen, dann bei 120 °C im Vakuum getrocknet. Die Zusammensetzung der so erhaltenen Copolymerisate sowie deren erster (unterer) und zweiter (oberer) Schmelzpunkt entsprechend von Hülle und Kern sind in Tabelle 2 angegeben.

**Tabelle 1**

| Beispiel Nr. | | 1 | 2 | 3 |
|---|---|---|---|---|
| Menge an Malonsäurediethylester [g] | | 4 | 4 | 0 |

| Kern | | | | |
|---|---|---|---|---|
| Abbruch bei TFE [g] | | 510 | 1000 | 1000 |
| Abbruch bei E [g] | | 120 | 247 | 249 |
| Zugabe an Kaliumpermanganat [g] | | 0,6 | 0,5 | 0,7 |
| Polymerisationsdauer [h] | | 1,4 | 3 | 2 |
| mittlere Teilchengröße [µm] | | --- | 0,09 | 0,1 |

| Hülle | | | | |
|---|---|---|---|---|
| Aufpressen: | | | | |
| 1. HFP bis [bar] | | 7,7 | 7,4 | 7,6 |
| 2. TFE bis [bar] | | 14,7 | 14,6 | 10,2 |
| 3. E bis [bar] | | 17,1 | 17,0 | 17,1 |
| Zuspeisungsverhältnis mol TFE : mol E : mol HFP | | 1 : 1 : 0,5 | 1 : 1 : 0,5 | 1 : 1 : 1 |
| Abbruch bei | TFE [g] | 103 | 102 | 52 |
| | E [g] | 23 | 23 | 12,5 |
| | HFP [g] | 55 | 88 | 134 |
| Zugabe an Kaliumpermanganat [g] | | 0,24 | 0,175 | 0,19 |
| Polymerisationsdauer [h] | | 0,5 | 0,4 | 0,35 |
| wäßrige Disperion erhalten [kg] | | 12,6 | 14,5 | 13,1 |
| Polymerisat-Feststoffgehalt [Gew.-%] | | 7,8 | 10,1 | 12,0 |
| mittlere Teilchengröße [µm] | | 0,06 | 0,08 | 0,12 |
| Koagulatbildung [g] | | < 1 | 1 | < 1 |

**Tabelle 2**

| Beispiel Nr. | 1 | 2 | 3 |
|---|---|---|---|
| Gewichtsverhältnis Kern : Hülle | 1 : 0,2 | 1 : 0,1 | 1 : 0,05 |

| Zusammensetzung des Gesamtpartikels: | | | |
|---|---|---|---|
| TFE [Mol-%] | 49,2 | 48,6 | 48,8 |
| E [Mol-%] | 49,3 | 50,6 | 50,6 |
| HFP [Mol-%] | 1,5 | 0,8 | 0,6 |

| Zusammensetzung der Hülle: | | | |
|---|---|---|---|
| TFE [Mol-%] | 46,2 | 45,3 | 44,3 |
| E [Mol-%] | 46,3 | 47,3 | 46,0 |
| HFP [Mol-%] | 7,5 | 7,4 | 9,7 |
| Unterer Schmelzpunkt nach DSC [°C] | 134 | 184 | 145 |
| Oberer Schmelzpunkt nach DSC [°C] | 282 | 280 | 283 |

### Beispiel 4

Eine Dispersion gemäß den Beispielen 1 bis 3 wird in einem Scheibenzerstäuber bei einer Scheibendrehzahl von 50 000 min⁻¹ und einer Umfangsgeschwindigkeit von 157 m/s und einem Gasvolumenstrom von 110 m³/h sprühgetrocknet. Die weiteren Parameter und die Ergebnisse zeigt die Tabelle 3.

Die Restfeuchte wurde nach siebenstündigem Trocknen im Trockenschrank (bei 200 °C und 10 mbar) und die Korngröße mit einem CILAS-Granulometer (dispergiert in wäßriger Tensidlösung mit Ultraschall) ermittelt.

**Tabelle 3**

| Dispersion nach Beispiel Nr. | 2 | 2 | 2 | 2 | 2 | 2 | 3 | 3 | 3 |
|---|---|---|---|---|---|---|---|---|---|
| Gastemperatur [°C]: | | | | | | | | | |
| Turmeintritt | 140 | 270 | 180 | 140 | 270 | 180 | 140 | 270 | 175 |
| Turmaustritt | 90 | 147 | 100 | 70 | 143 | 100 | 70 | 147 | 100 |
| | | | | | | | | | |
| Einspeisung [kg/h] | 2,6 | 2,5 | 4,5 | 1,7 | 4 | 5,3 | 1,7 | 3,5 | 4,8 |
| Versuchsdauer [min] | 60 | 60 | 95 | 60 | 60 | 117 | 65 | 65 | 105 |

| Restfeuchte [%]: | | | | | | | | | |
|---|---|---|---|---|---|---|---|---|---|
| Speise | 87,5 | 87,5 | 87,5 | 89,9 | 89,9 | 89,9 | 88 | 88 | 88 |
| Trockengut | 0,62 | 0,7 | 7,5 | 6,39 | 0,64 | 0,68 | 9,51 | 1,81 | 0,63 |

| Korngut [µm]: | | | | | | | | | |
|---|---|---|---|---|---|---|---|---|---|
| d10 | 8,5 | 10,2 | 7,9 | 5,8 | 9,1 | 5,9 | 5,5 | 9,7 | 8,2 |
| d50 | 13,7 | 18,3 | 16,4 | 18,2 | 35,8 | 20,2 | 16,1 | 32,2 | 15,1 |
| d90 | 19,9 | 29 | 28,7 | 42,1 | 79,6 | 45,1 | 35,5 | 56,4 | 24,9 |

Die in den Beispielen angegebenen Größen werden nach folgenden Meßmethoden bestimmt:
1. Mittlere Teilchengröße der Primärteilchen:
   Die stark mit Wasser verdünnte Dispersion wird auf ein Kupfernetz aufgetragen und getrocknet. Es wird eine elektronenmikroskopische Aufnahme mit einer Vergrößerung um den Faktor 17 000 aufgenommen, und zwar auf einem ELMISKOP II der Firma Siemens. Die Aufnahme wird nochmals um den Faktor 4,25 vergrößert. Das resultierende Bild wird dann mit einem Teilchengrößen-Zählgerät der Firma Zeiss (Typ TGZ 3) nach der Teilchengröße ausgezählt. Der mittlere Teilchendurchmesser errechnet sich aus der resultierenden Verteilungskurve.
2. Copolymerzusammensetzung:
   Zur Bestimmung der Copolymerzusammensetzung wird zum einen der Fluorgehalt durch Verbrennung des aus der Dispersion gewonnenen Copolymerisatpulvers in einer Wickbold-Apparatur und anschließender calorimetrischen Fluoridtitration mit Thoriumnitrat ermittelt. Weiterhin läßt sich aus dem ¹⁹F-NMR des mit Adipinsäurediethylester versetzten und auf 200 bis 250 °C erhitzten Polymerpulvers, gemessen in einem Kernresonanzspektrometer MSL 300 der Firma Bruker, das molare Verhältnis von Tetrafluorethylen und Hexafluorpropylen bestimmen.
   Die Zusammensetzung der Gesamtteilchen läßt sich aus der Kombination von Fluorgehalt und TFE/HFP-Verhältnis berechnen.
   Um die Copolymerzusammensetzung der Außenhülle zu ermitteln, verrechnet man die Analysenergebnisse von in gleicher Weise polymerisierten Teilchenkernen (ohne äußere modifizierte Schale) mit denen von Kern-Hülle-Teilchen.
3. Schmelzpunkte:
   Die Schmelzpunkte von Kern und Hülle werden mit einem Differential Scanning Calorimeter DSC-4 der Firma Perkin Elmer gemessen.

## Patentansprüche

1. Wäßrige Dispersion kolloidaler Teilchen eines aus der Schmelze verarbeitbaren Copolymers, bestehend aus
a) einem Teilchenkern aus einem Copolymer mit Einheiten aus
32 bis 60 Mol-% Tetrafluorethylen,
40 bis 60 Mol-% Ethylen und
0 bis 8 Mol-% mindestens eines copolymerisierbaren fluorolefinischen Monomeren, sowie
b) mindestens einer Teilchenhülle aus einem aus der Schmelze verarbeitbaren Polymer mit einem um mindestens 20 °C niedrigeren Schmelzpunkt als dem des Copolymer des Teilchenkerns,
wobei das Volumen der Teilchenhülle(n) 1 bis 26 Vol.-% des Gesamtvolumens des Teilchens beträgt.

2. Dispersion nach Anspruch 1, dadurch gekennzeichnet, daß das den Teilchenkern ausmachende Copolymere einen Schmelzpunkt von ≥ 250 °C aufweist.

3. Dispersion nach Anspruch 1 oder 2, dadurch gekennzeichnet, daß das den Teilchenkern ausmachende Copolymere 60 bis 40 Mol-% copolymerisierte Einheiten des Tetrafluorethylens und 40 bis 60 Mol-% copolymerisierte Einheiten des Ethylens enthält.

4. Dispersion nach Anspruch 1 oder 2, dadurch gekennzeichnet, daß das copolymerisierbare fluorolefinische Monomere ein Perfluorolefin mit 3 bis 8 C-Atomen, ein Perfluoralkylvinylether der Formel
Rf1-[O-CF(CF₃)-CF₂]ₙ-CF₂-O-CF=CF₂,
worin Rf1 ein Perfluoralkylrest mit 1 bis 5 C-Atomen und n = 0 bis 3 ist,
oder ein Fluorolefin der Formeln
CH₂=CH-Rf2
oder 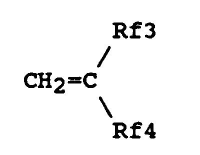 worin Rf2 und Rf3 ein Perfluoralkylrest mit 1 bis 8 C-Atomen und Rf4 F oder CF₃ sind.

5. Dispersion nach einem oder mehreren der vorhergehenden Ansprüche, dadurch gekennzeichnet, daß das die Teilchenhülle ausmachende Polymere ein Copolymeres ist, das aus copolymerisierten Einheiten des Tetrafluorethylens, des Ethylens und mindestens eines weiteren fluorhaltigen Comonomeren besteht.

6. Dispersion nach Anspruch 5, dadurch gekennzeichnet, daß das Copolymer 20 bis 30 Mol-% an copolymerisierten Einheiten des Tetrafluorethylens, 40 bis 60 Mol-% des Ethylens und 10 bis 30 Mol-% des Hexafluorpropens enthält.

7. Koaguliertes Pulver aus einem Fluorpolymeren nach einem oder mehreren der Ansprüche 1 bis 6, dessen koagulierte Sekundärteilchen eine mittlere Teilchengröße von 5 µm bis 2 mm aufweisen.

8. Sprühgetrocknetes Pulver aus einem Fluorpolymeren nach einem oder mehreren der Ansprüche 1 bis 6, dadurch gekennzeichnet, daß die durch Sprühtrocknung gewonnene Sekundärteilchen eine mittlere Teilchengröße von 1 bis 100 µm aufweisen.

9. Verfahren zur Herstellung einer Dispersion nach einem oder mehreren der Ansprüche 1 bis 6, dadurch gekennzeichnet, daß zunächst
A) eine Saatdispersion durch Copolymerisation von Tetrafluorethylen, Ethylen und gegebenenfalls weiteren fluorolefinischen Comonomeren hergestellt wird, und sodann
B) die Polymerisation in Gegenwart der Saatdispersion A) durch Zuführen der Monomeren für die Teilchenhülle fortgesetzt wird, wobei die Teilchenhülle ein Polymeres darstellt, das einen um mindestens 20 °C niedrigeren Schmelzpunkt besitzt als das Copolymere von Stufe A), wobei das Volumen der Teilchenhülle(n) 1 bis 26 Vol.-% des Gesamtvolumens des kolloidalen Teilchens beträgt.

10. Verwendung der Pulver nach Anspruch 7 oder 8 zur Herstellung poröser Strukturen.

## Claims

1. An aqueous dispersion of colloidal particles of a melt-processable copolymer, comprising
a) a particle core of a copolymer having units of
from 32 to 60 mol% of tetrafluoroethylene,
from 40 to 60 mol% of ethylene and
from 0 to 8 mol% of at least one copolymerizable fluoroolefinic monomer, and also
b) at least one particle shell of a melt-processable polymer having a melting point at least 20°C lower than that of the copolymer of the particle core,
where the volume of the particle shell(s) is from 1 to 26% by volume of the total volume of the particle.

2. A dispersion as claimed in claim 1, wherein the copolymer making up the particle core has a melting point of ≥ 250°C.

3. A dispersion as claimed in claim 1 or 2, wherein the copolymer making up the particle core comprises from 60 to 40 mol% of copolymerized units of tetrafluoroethylene and from 40 to 60 mol% of copolymerized units of ethylene.

4. A dispersion as claimed in claim 1 or 2, wherein the copolymerizable fluoroolefinic monomer is a perfluoroolefin having from 3 to 8 carbon atoms, a perfluoro(alkyl vinyl ether) of the formula
Rf1-[O-CF(CF₃)-CF₂]ₙ-CF₂-O-CF=CF₂
where Rf1 is a perfluoroalkyl radical having from 1 to 5 carbon atoms and n is from 0 to 3,
or a fluoroolefin of the formula
CH₂=CH-Rf2
or 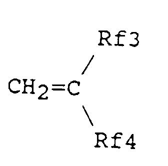 where Rf2 and Rf3 are each a perfluoroalkyl radical having from 1 to 8 carbon atoms and Rf4 is F or CF₃.

5. A dispersion as claimed in one or more of the preceding claims, wherein the polymer making up the particle shell is a copolymer comprising copolymerized units of tetrafluoroethylene, of ethylene and at least one further fluorine-containing comonomer.

6. A dispersion as claimed in claim 5, wherein the copolymer comprises from 20 to 30 mol% of copolymerized units of tetrafluoroethylene, from 40 to 60 mol% of ethylene and from 10 to 30 mol% of hexafluoropropene.

7. A coagulated powder of a fluoropolymer as claimed in one or more of claims 1 to 6, whose coagulated secondary particles have a mean particle size of from 5 µm to 2 mm.

8. A spray-dried powder of a fluoropolymer as claimed in one or more of claims 1 to 6, wherein the secondary particles obtained by spray drying have a mean particle size of from 1 to 100 µm.

9. A process for preparing a dispersion as claimed in one or more of claims 1 to 6, which comprises first
A) preparing a seed dispersion by copolymerization of tetrafluoroethylene, ethylene and, if desired, further fluoroolefinic comonomers, and then
B) continuing the polymerization in the presence of the seed dispersion A) by supplying the monomers for the particle shell, where the particle shell is a polymer having a melting point at least 20°C lower than that of the copolymer of stage A),
where the volume of the particle shell(s) is from 1 to 26% by volume of the total volume of the colloidal particle.

10. Use of the powder as claimed in claim 7 or 8 for the production of porous structures.

## Revendications

1. Dispersion aqueuse de particules colloïdales d'un copolymère que l'on peut transformer en fusion, composée :
a) d'un coeur de la particule en un copolymère avec des motifs :
de 32 à 60 % en moles de tétrafluoréthylène,
de 40 à 60 % en moles d'éthylène, et
de 0 à 8 % en moles d'au moins un monomère copolymérisable fluorooléfinique, ainsi que
b) d'au moins une enveloppe de la particule en un polymère transformable en fusion ayant un point de fusion inférieur d'au moins 20°C à celui du copolymère du coeur de la particule,
le volume de(s) l'enveloppe(s) de la particule représente de 1 à 26 % en volume du volume total de la particule.

2. Dispersion selon la revendication 1, caractérisée en ce que le copolymère qui constitue le coeur de la particule présente un point de fusion ≥250°C.

3. Dispersion selon la revendication 1 ou 2, caractérisée en ce que le copolymère qui constitue le coeur de la particule contient de 60 à 40 % en moles de motifs copolymérisés de tétrafluoréthylène et de 40 à 60 % en moles de motifs copolymérisés d'éthylène.

4. Dispersion selon la revendication 1 ou 2, caractérisée en ce que le monomère fluorooléfinique copolymérisable est une perfluorooléfine avec 3 à 8 atomes de carbone, un perfluoroalkylvinyléther de formule :
Rf1-[O-CF(CF₃)-CF₂]ₙ-CF₂-O-CF=CF₂
où Rf1 est un reste perfluoroalkyle avec 1 à 5 atomes de carbone et n va de 0 à 3,
ou une fluorooléfine de formule :
CH₂=CH-Rf2
ou 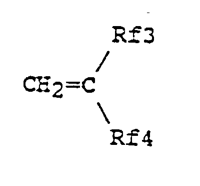 où Rf2 et Rf3 sont un reste perfluoroalkyle avec 1 à 8 atomes de carbone et Rf4 représente F ou CF₃.

5. Dispersion selon une ou plusieurs des revendications précédentes, caractérisée en ce que le polymère constituant l'enveloppe de la particule est un copolymère qui est composé de motifs copolymérisés de tétrafluoréthylène, d'éthylène et d'au moins un comonomère fluoré.

6. Dispersion selon la revendication 5, caractérisée en ce que le copolymère contient de 20 à 30 % en moles de motifs copolymérisés de tétrafluoréthylène, de 40 à 60 % en moles d'éthylène et de 10 à 30 % en moles d'hexafluoropropène.

7. Poudre coagulée d'un polymère fluoré selon une ou plusieurs des revendications 1 à 6, dont les particules secondaires coagulées présentent une granulométrie moyenne de 5 µm à 2 mm.

8. Poudre séchée par pulvérisation d'un polymère fluoré selon une ou plusieurs des revendications 1 à 6, caractérisée en ce que les particules secondaires obtenues par séchage par pulvérisation présentent une granulométrie moyenne de 1 à 100 µm.

9. Procédé pour la préparation d'une dispersion selon une ou plusieurs des revendications 1 à 6, caractérisé en ce que :
A) on prépare une dispersion d'ensemencement par copolymérisation du tétrafluoréthylène, de l'éthylène et éventuellement d'au moins un autre comonomère fluorooléfinique, et ensuite
B) on poursuit la polymérisation en présence de la dispersion d'ensemencement A) par apport de monomères pour l'enveloppe de la particule, où l'enveloppe de la particule représente un polymère dont le point de fusion est inférieur d'au moins 20 °C à celui du copolymère de l'étape A), le volume de(s) l'enveloppe(s) de la particule étant de 1 à 26 % en volume du volume total de la particule colloïdale.

10. Utilisation de la poudre selon la revendication 7 ou 8, pour la préparation de structures poreuses.
